# EUROPEAN PATENT SPECIFICATION

(11) **EP 1 549 878 B1**
(45) Date of publication and mention of the grant of the patent: **12.12.2007**
(21) Application number: 03753163.9
(22) Date of filing: 06.10.2003
(51) Int. Cl.: F17C 5/00

(54) **RESIDENTIAL COMPRESSOR FOR REFUELING MOTOR VEHICLES THAT OPERATE ON GASEOUS FUELS**
HAUSEIGENER KOMPRESSOR ZUM BETANKEN VON GASBETRIEBENENEN FAHRZEUGEN
COMPRESSEUR DOMESTIQUE POUR RAVITAILLER EN COMBUSTIBLE DES VEHICULES A MOTEUR UTILISANT DES COMBUSTIBLES GAZEUX

(30) Priority: 04.10.2002 US 265096
(43) Date of publication of application: 06.07.2005
(73) Proprietor: Fuelmaker Corporation, Toronto, Ontario M9W 5X2 (CA)
(72) Inventor: CHAN, Anthony, North York, Ontario M2M 2E4 (CA); WOJCIECHOWSKIM, Pawel, Toronto, Ontario M5V 3P6 (CA); RACKHAM, Ralph, Toronto, Ontario M5M 1G1 (CA); DEMALINE, Tracey, Milton, Ontario L9T 6E6 (CA); CHAPNIK, Brian, Thornhill, Ontario L4J 7B5 (CA); MOJSOV, Tome, Toronto, Ontario M2N 6Z7 (CA)
(74) Representative: Cheyne, John Robert Alexander M.
(86) International application number: PCT/CA2003/001475
(87) International publication number: WO 2004/031643

(56) References cited:
- CH-A- 676 951
- DE-C- 19 859 423
- US-A- 4 501 253
- US-A- 4 624 390
- US-A- 4 966 206
- US-A- 5 029 622
- US-A- 5 263 826
- US-A- 5 370 159
- US-A- 5 501 200
- US-A- 5 653 269

## Description

### FIELD OF THE INVENTION

This invention relates to a home refueling appliance for the refueling motor vehicles that operate on gaseous fuels. In particular, it relates to a compressor that delivers high-pressure gas to the storage reservoir of gaseous fuel motor vehicles and monitoring and control elements that allow the appliance to operate in an unattended manner.

### BACKGROUND TO THE INVENTION

Motor vehicles that operate on gaseous fuels, typically natural gas and hydrogen are refueled at stations that dispense gas at high pressure, typically 20 MPa (3000 pounds per square inch) and higher. These refueling stations are generally of two types. The first type is either a public or private refueling station that is capable of refueling gaseous-fueled motor vehicles in about the same amount of time as is required to refuel a comparable gasoline-fueled motor vehicle.

The second type is a private refueling station that is more typically capable of refueling motor vehicles over a period of several hours, typically overnight.

To date, gaseous-fueled motor vehicles have not been an attractive option to private motor vehicle operators. Public natural gas refueling stations are too few and far between in most areas to meet private motor vehicle operators expectations for refueling convenience. Private natural gas refueling stations have generally been too expensive to be attractive to private operators of one or two natural gas vehicles. Additionally, existing floor-mounted refueling compressors are bulky and inconvenient to install. Mainly for these reasons, the market for natural gas vehicles has been largely restricted to motor vehicle fleet operators.

One of the greatest barriers to the commercial introduction of hydrogen-powered motor vehicles is the virtually complete absence of hydrogen refueling stations and related infrastructure such as hydrogen production and transportation facilities. It will be several years before even limited hydrogen refueling infrastructure is available.

A need exists for a home refueling appliance to compress gas for refueling motor vehicles that is simple to install, operates with reduced noise and vibration levels that are comparable to other residential appliances, and which can be operated safely by untrained users. Such a system should be suitable for use in residences or other locations that have a standard electrical service and have natural gas service, a source of hydrogen, such as either a water electrolyser or natural gas reformer, or a source of another type of gaseous fuel. Preferably, such a home refueling appliance should have the capacity to fill the fuel reservoir of a typical gaseous fuel light duty vehicle in five to eight hours. It is also desireable that such a unit be conveniently mounted at a position that will protect it from damage. The present invention addresses all of these objectives.

During start-up and normal operation of a home refueling appliance vibration is generated by the reciprocating movement of the compressor pistons and by the rotating mass of the shaft that drives the pistons. The reciprocating and rotating masses are dynamically unbalanced, which results in a dominant low frequency vibration of about 10 to 15 hertz during start-up and low speed operation; and a dominant high frequency vibration of up to about 30 to 35 hertz occurring during normal operation. The primary modes of vibration arise from reciprocating forces in a vertical plane and rotational reciprocating moments around an axis passing approximately through the center of mass of the motor/compressor assembly, as well as torsional forces caused by variations in gas pressure.

A need exists for minimizing the transmission of vibrations from the appliance to the structure that provides support.

Gas leaks can occur both from within a compressor unit and from outside a compressor unit, for example at the connection to the vehicle, or arising from the vehicle itself. It is important to detect gas leaks when they arise from either source. Gas leak sensors have been individually built into compressors, and mounted within structures to provide environmental leak detection. However, an opportunity exists with respect to the present invention to combine both functions. The present invention addresses that objective.

It is recognized that, if a gas supply line to a compressor becomes disconnected, air may be drawn into the compressors. As this air will mix with gas, it may form an explosive mixture. Thus it is an established practice to provide a gas sensing means for detecting the absence of gas pressure in the supply line that should be connected to a gas source.

Additionally, the inlet pressure from a domestic natural gas main is typically about 1.38 to 3.45 kPa (0.2 to 0.5 psi). This gas pressure may be needed to sustain pilot lights operating within a nearby residence. If the main gas supply system drops to a lower level, the added burden of the home refueling appliance may cause such pilot lights to go out. Consequently, it is desirable to protect against the consumption of gas by an appliance when this will expose neighbouring appliances to the risk of having their pilot lights extinguished.

DE 19859423 discloses a gas refuelling device including a safety sensor system for detecting dangerous gases coupled to a switching device for closing the gas supply line.

CH 676951, considered as closest prior art, discloses an appliance for refuelling gaseous fuel motor vehicles, according to the preamble of claim 1, comprising:
a) a housing containing a motor/compressor assembly in the form of a multi-stage gas compressor and an electric motor that drives the multistage compressor, said compressor and motor being contained in a common, sealed casing;
b) an electrical connection means to supply power to the motor;
c) a gas inlet on the appliance to connect the appliance to a source of gas; and
d) a gas outlet for delivery of compressed gas to a fuel storage reservoir.

The invention in its general form will first be described, and then its implementation in terms of specific embodiments will be detailed with reference to the drawings following hereafter. These embodiments are intended to demonstrate the principle of the invention, and the manner of its implementation. The invention in its broadest and more specific forms will then be further described, and defined, in each of the individual claims, which conclude this specification.

### SUMMARY OF THE INVENTION

The invention relates to a wall-mounted gas compressor, and more particularly an appliance for refuelling gaseous fuel motor vehicles while they are parked at a residence or other location where a vertical wall or upright support is available, such as may be present in a garage or carport.

According to the present invention the appliance comprises monitoring and control elements that allow the appliance to operate in an unattended manner, and support means to allow the appliance to be mounted on said upright support at a height that is above 0.91 m (36 inches) from the ground.

The home refueling appliance variant of the invention is preferably designed to be mounted either on a wall, a post support member or other structure at about eye level. The unit is to be mounted preferably at least 0.91 m (36 inches) above the ground, and more preferably, above the height of the hood of a standard passenger vehicle, e.g. above 1.22 m (48 inches) from the ground. This is to ensure that the appliance is clear of any areas were it might be run into by a moving object, such as a motor vehicle. This avoids the cost of vehicle impact protection such as bollards and other barriers.

The appliance can be wall-mounted either between wall studs, or flush against a flat wall through mounting brackets that are fastened to the upright support. Alternatively, the appliance can be post-mounted on, for example, a carport post or a freestanding post, either indoors or outdoors, again through mounting brackets as required. A spirally formatted discharge hose may be provided that retracts when not extended for use.

Preferably, the electric motor and compressor are combined in a single assembly that is mounted in a housing. This assembly is fitted to the housing through first vibration isolators that dampen vibrations. The housing itself is additionally mounted to its upright support means through second vibration isolators that further dampen vibration. Thus the home refueling appliance of the invention is preferably fitted with two stages of vibration absorption: vibration isolators that seduce the transmission of vibrations from the motor/compressor assembly into the housing and further, vibration isolators that reduce the transmission of vibrations through the mounting brackets of the housing into the wall, post or other upright support to which the unit is attached.

This particularly allows the appliance to be mounted on walls as a support structure, making it more practical to mount the appliance on the wall of a garage adjacent to living quarters, since the amount of vibration and noise that is transmitted to the living quarters is reduced.

The outer housing, according to the invention, is mounted on a wall through a novel.system of angled, rubber or rubber-like, e.g., flexible, polymeric, cushioning washers. Because the motor/compressor assembly is mounted on a wall surface or equivalent, with its back face to the wall, its weight tends to develop a twisting moment that would cause the unit to rotate away from the wall if it were released from its top end. If the unit were mounted on rubber cushioning washers that were oriented with their axes in a vertical alignment then, because of this torque effect, a shearing force would be applied to these washers. As these washers are intentionally very soft and of considerable thickness in order to absorb vibration, e.g., of a thickness that approaches their width, the presence of such a shearing force would be very undesirable.

Thus, according to the invention, the rubber cushioning washers are set at an inclined angle that eliminates or minimizes the shearing force on such washers. At the top of the unit, this means angling the upper portion of the axes of the washers away from the mounted unit, towards the direction of the wall or support structure, preferably by an angle of about 20° to 40°, such angle being based on the weight and geometry of the unit. At the bottom of the unit, the upper portions of the axes of the washers are angled away from the wall and towards the unit by a similar angle or optionally differing angle. By mounting such vibration-reducing washers so as to minimize shear forces, they are able to more effectively provide vibrational isolation between the wall-mounted motor/compressor appliance and the wall surface against which it is mounted.

A further stage of vibration isolation is provided in the fittings through which the motor/compressor assembly is mounted in the housing. These fittings preferably comprise flexible polymeric, e.g. rubber, mounts that are located on either side of a horizontal plane passing approximately through and preferably slightly above the center of mass or rogation of the motor/compressor assembly. This arrangement allows the reciprocating movements within the assembly to tend to induce a rocking motion about an axis formed by a straight line extending between the mounts. A damping means may also be included between the motor/compressor assembly and the housing to absorb energy arising from such rocking vibrations. This damper may be located between the body of the motor/compressor assembly and any portion of the housing or may be located beneath the assembly. A preferred location is at the top or base of the motor/compressor assembly where motion is greatest.

In a preferred variant this damper means includes a resilient, flexible, rubber-like member in the approximate shape of a finger extending from the motor/compressor casing downward into a socket or receiving means on the bottom, inside surface of the housing. The finger and receiving means act as a damping pot. The damper means may also be based on a rigid extension from the motor/compressor assembly extending into a flexible receiving means, e.g. a resilient rubber tube mounted on the casing. As the appliance rocks about the axis extending between the mounts, this motion is resisted by the resilient, element to dampen the vibration caused by the rotational reciprocating moments of the compressor/motor assembly.

In this manner, using two vibration isolations positioned in series, a highly effective reduction in the transmission of vibrations from the appliance to its support structure is achieved.

The invention optionally but preferably includes a cooling and ventilation system for the appliance that serves as well to detect the leakage of gas both from within the unit and from within the environment around the unit. This system incorporates with the housing of the unit an air inlet, a fan and an air outlet to provide an air circulation zone around the motor/compressor assembly for cooling and ventilation. A flammable gas sensor is then mounted in the airflow path, preferably near the top of the appliance with circulating air entering from the bottom of the appliance. This sensor is positioned to sample air that has passed by the compressor, providing an indication if gas leakage should arise from within the unit.

By mounting the appliance at an elevated level on a wall or elevated support structure, the fan will tend to circulate air from the upper region of the adjacent environmental space, e.g. the top half of a room such as a garage. Since natural gas, hydrogen and many other flammable gases are typically lighter than air, any concentrations of such lighter than air flammable gases in the adjacent space will be found in the higher elevations of the space. Due to the circulation of air created by the ventilation system, mixing will be induced and any flammable gas present in the room will tend to be drawn into the appliance.

The flammable gas sensor will then detect not only gas that has escaped from the compressor, but also gas that has escaped in the local environment, for example, from an adjacent, parked motor vehicle. Thus both machine gas and room gas may be sampled by a single flammable gas sensor.

An airflow sensor may also be placed in the path of the re-circulating air, preferably at the base of the housing. Such a sensor may be coupled to the control system for the appliance, ensuring that the appliance will be shut off if, for some reason, there is an interruption in the flow of ventilation and cooling air.

Optionally, the ventilation exhaust may be either re-circulated within the adjacent space or directed outdoors, as through a wall-penetrating duct connected to the air outlet of the appliance.

To prevent the introduction of air into the motor vehicle reservoir arising from the disconnection of the inlet hose of the unit from its gas source, the appliance will normally incorporate an input line pressure sensing means that detects the absence of pressure arising from the decoupling of the input connector from the gas line. This gas sensing means combined with processing circuitry, as is previously known, provides a signal for the appliance to be shut off when it senses the absence of source gas pressure. Consequently, if the inlet hose is disconnected, the appliance will not inadvertently introduce compressed air into the motor vehicle's fuel reservoir.

This pressure sensing system, according to the invention, also operates by sensing when the pressure of the inlet gas falls below a settable, threshold pressure level that is above zero, for example, 1.38 kPa (0.2 psi). Under such conditions operation of the appliance is suspended.

Thus the system of the invention protects against the risk of having the compressor system of the invention interfere with neighbouring appliances.

### BRIEF DESCRIPTION OF THE DRAWINGS

Figure 1 is a pictorial representation of a gaseous fuel motor vehicle parked in a garage having a home refueling appliance according to the invention mounted on its inner wall.
Figure 2 is an end view of Figure 1 showing air circulation around a vehicle parked in the garage.
Figure 3 is a face view of the appliance of Figure 1 exposing the front face of the inner housing that serves as a shroud or cowling covering and containing the compressor and motor assembly in combination with the back panel of the outer housing.
Figure 4 is a face view of the compressor and motor assembly with the inner cowling removed showing the two side mounts by which the assembly is connected to the housing and showing the ventilation fan and ventilation air flow path.
Figure 5 is a perspective view of the outer housing taken from a rear, wall-side position showing its wall-mounting frame.
Figure 6 is a perspective view of the frame of Figure 5 by itself.
Figure 7 is an exploded assembly perspective view of the rear panel of the outer housing and frame positioned for attachment to two horizontal brackets.
Figure 8 is the view of Figure 7 with the referenced components assembled.
Figure 9 is a partial, cross-sectional side view of the assembly of Figure 5 showing angled upper and lower resilient supports between the frame and the outer housing.
Figure 10A is a detailed side view of the upper support of Figure 9.
Figure 10B is a detailed side view of the lower support of Figure 9.
Figure 11 is a schematic depiction of the principal components of the appliance, including the unitary motor/compressor assembly, blow down volume, control circuits and other support elements including various sensors.

### DESCRIPTION OF THE PREFERRED EMBODIMENT

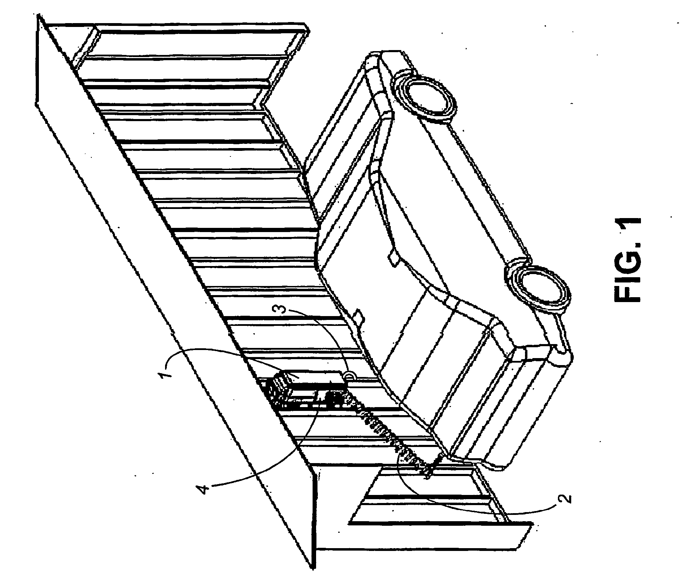

In Figure 1 the home refueling appliance 1 is shown mounted on a garage wall with the high-pressure discharge hose 2 connected to a car, the inlet hose 3 connected to a source of gas, and the electrical cord 4 plugged into a standard household receptacle.

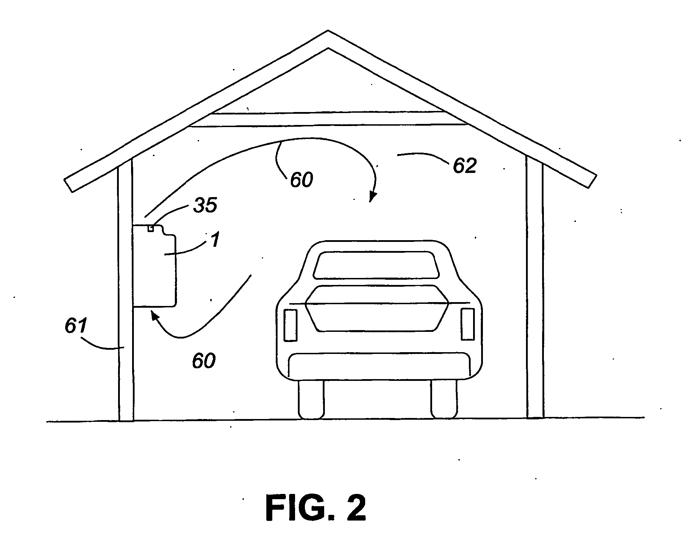

In Figure 2 the circulation of air 60 caused by the ventilation fan in the appliance 1 within the garage is depicted. Because the appliance 1 is mounted at an elevated position on the garage wall 61, this circulation includes air from the upper region 62 of the garage.

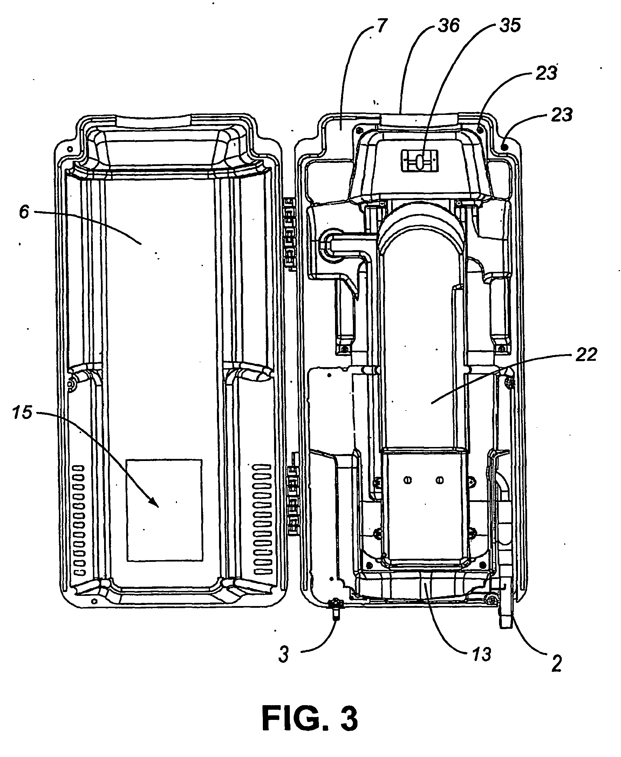

Figure 3 is a face view of the appliance in its outer housing 7 oriented to be mounted between wall studs 5 (not shown in Figure 3) with the front access cover 6 open to expose the inner ventilation housing which serves as a shroud or cowling 22. The high-pressure discharge hose 2 is in its fully retracted position. Air inlet vents 13 are located at the bottom of the housing 7, beneath the motor/compressor assembly 32. An air outlet 36 is mounted at the top of the unit. Gas source 3 and gas delivery 2 lines are also connected to the unit.

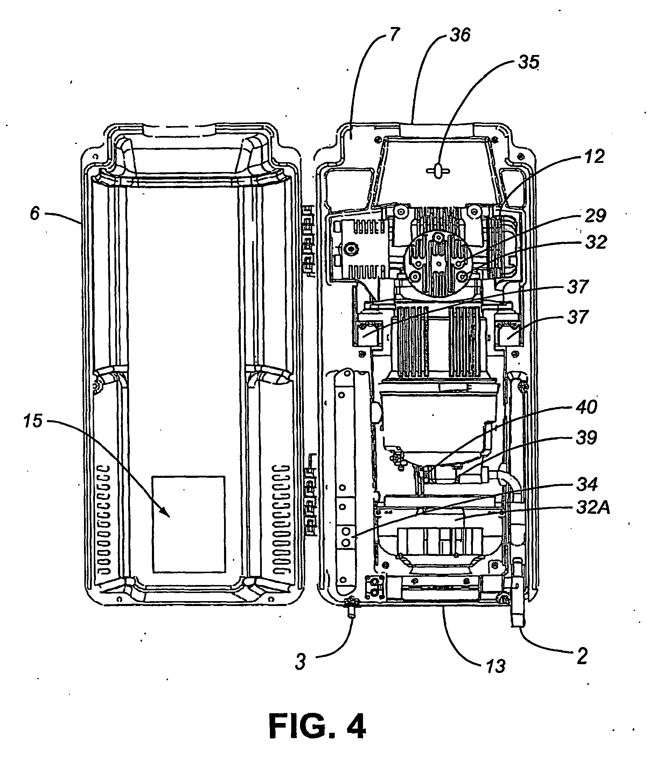

Referring to Figures 3 and 4, a front cowling 22 that serves as part of a shroud is attached to the back panel of the outer housing 7 by screws 23. The back panel of the outer housing 7 and the cowling 22 form a ventilation enclosure for the compressor 29, the compressor motor 30 and the blow-down volume 31, all of which are within a common case and constitute the motor/compressor assembly 32. The ventilation fan 32A and ancillary components are also shown in Figure 4. The ventilation fan 32A draws cooling air in through the inlet vents 13, past the air flow sensor 34, and circulates the air over the motor/compressor assembly 32, as well as other components within the enclosure formed by the back panel of the outer housing 7 and the cowling 22.

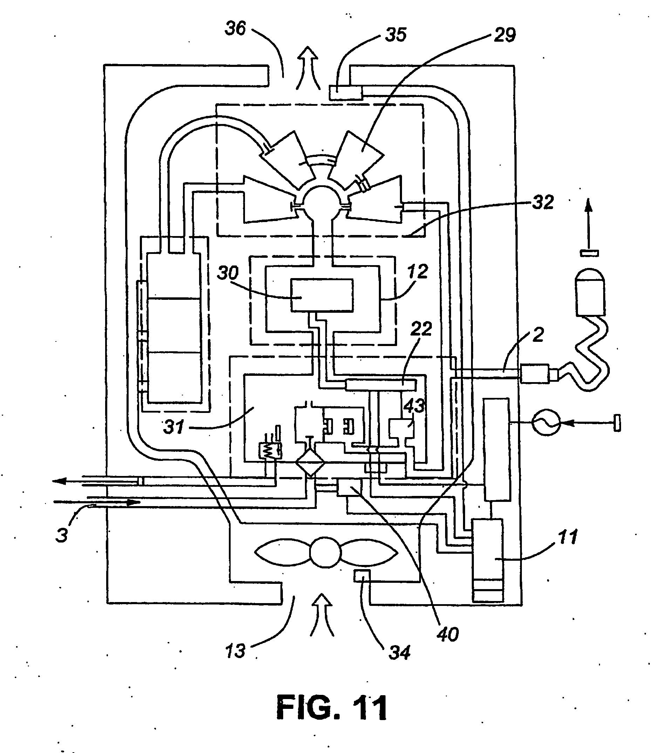

Air on leaving this ventilation enclosure passes by the flammable gas sensor 35, shown in Figure 4 and out through the air outlet 36. All sensors are connected to a central computer-circuit based main logic controller 11, was shown by the connections in Figure 11. If the air flow sensor 34 indicates that the cooling air flow is below a pre-set minimum limit e.g., if there is an interruption in the flow of ventilation and cooling air; or if the flammable gas sensor 35 detects the presence of a flammable gas in the cooling air, the central logic controller 11 ensures that the appliance 1 will not start up if it is already shut down; or will shut down if it is running.

By mounting the appliance at an elevated level on a wall or elevated support structure, the fan 32A will tend to circulate air from the upper region of the adjacent environmental space, which may contain lighter than air flammable gases in the adjacent space. Due to the circulation of air created by the ventilation system, such flammable gas will tend to be drawn into the appliance. The flammable gas sensor 35 will then detect not only gas that has escaped from the compressor 29, but also gas that has escaped in the local environment.

The motor/compressor assembly 32 in casing 12 is secured to the back panel of the outer housing 7 by two vibration-limiting elements in the form of polymeric side mounts 37, shown in Figure 4. The casing 12 is further connected to a polymeric damper 39, shown in Figure 4. The side mounts 37 are located slightly above the approximate center of rotation or mass of the motor/compressor assembly 32, along a horizontal line that passes preferably along a horizontal plane that passes approximately just above such center. This arrangement allows the reciprocating movements within the assembly to tend to induce a rocking motion about an axis formed by a straight line extending between the mounts. The two polymeric side mounts 37 and the polymeric damper 39 suppress the transmission of vibration from the motor/compressor assembly 32 to the outer housing 7.

In a preferred variant the damper means 39 is in the form of a finger-like protrusion that extends into socket 39 mounted on the hosing 7 that acts as a damping pot. As the appliance rocks about the axis extending between the side mounts 37, this motion is resisted by the resilient, socket-like fitting 39 to dampen the vibration caused by the rotational reciprocating moments of the compressor/motor assembly 32.

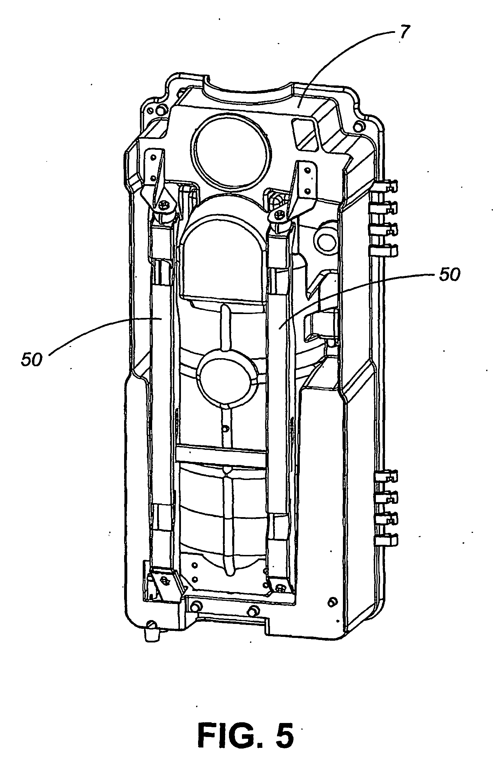

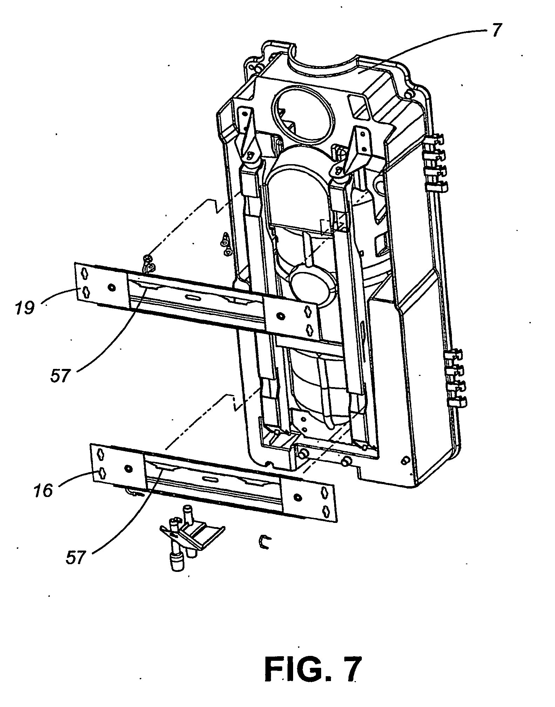

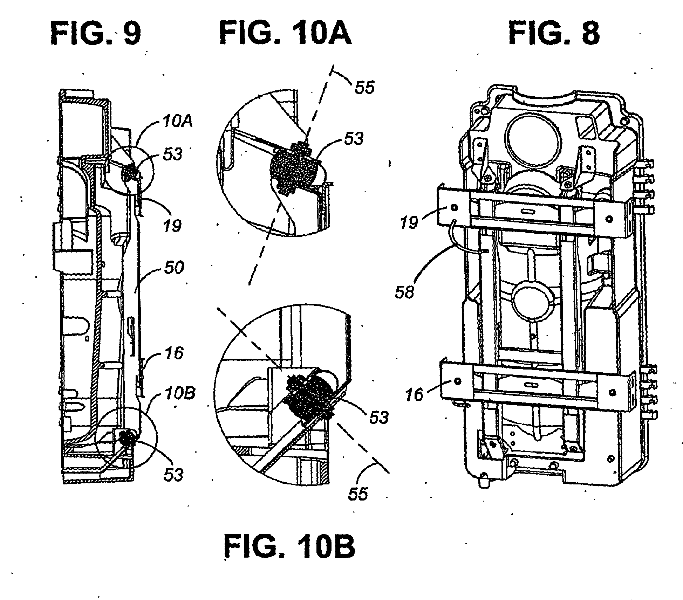

The outer housing 7 as shown in Figure 5 itself is provided with mounting hardware which includes a frame 49 with two notched mounting bars 50 for mounting onto a lower mounting bracket 16, and an upper mounting bracket 19 as in Figures 7, 8. These brackets 16, 17 are fastened to the support structure. The outer housing 7, is mounted to the frame 49 through a novel system of elements in the form of angled, rubber or rubber-like, cushioning washers 53.

The rubber cushioning washers 53 as shown in Figures 9, 10A, 10B are set at an inclined angle that eliminates or minimizes the shearing force on such washers. At the top of the unit, this means angling the top portion of the axes 54 of the washers 53 away from the mounted unit, towards the direction of the wall, by an angle of about 30°, such angle being based on the weight and geometry of the unit.. At the bottom of the unit, the top portion of the axes 55 of the washers 53 are angled away from the wall and towards the unit by an angle of about 45°. The angles of these respective cushioning washer 53 may differ in accordance with the location of the center of mass which they support. By mounting such vibration-reducing washers 53 at an angle, a more effective vibrational isolation is provided between the wall-mounted motor/compressor appliance and the surface against which it is mounted.

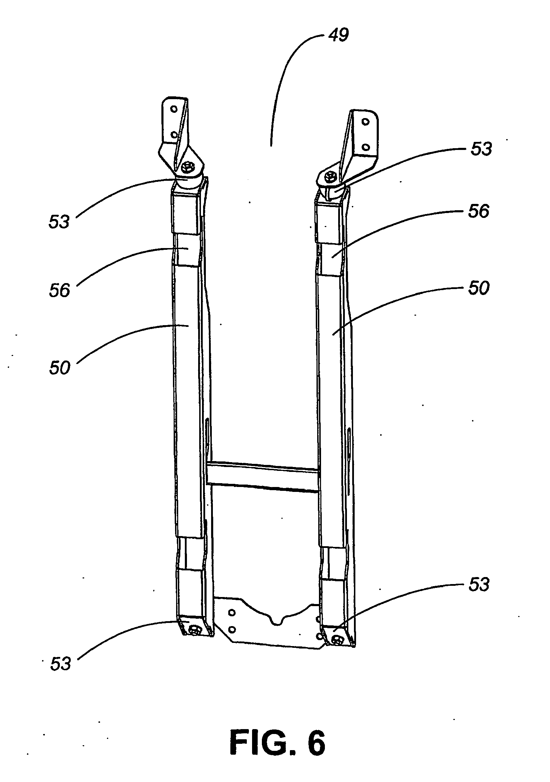

The notches 56 in the bars 50 of Figure 6 engage with tapered indentations 57 along the faces of brackets 16, 19. This permits the mounting of the appliance at its elevated location by the simple procedure of lifting the unit to align the notches 56 with the indentations 57 and advancing these elements into engagement. Angled sides on the indentations 57 reduce the accuracy demanded for carrying-out this "docking" procedure.

A latch or tether 58 may also be included as fastening security means to fix the engagement of the unit to the brackets 16, 19 These components provide security in the event of seismic disruptions i.e. earthquakes.

To prevent the introduction of air into the motor vehicle reservoir arising from the disconnection of the inlet hose 3 of the unit from its gas source, the appliance will normally incorporate an input line pressure sensing means 40 that detects the absence of pressure arising from the decoupling of the input connector from the source gas line 3. This gas sensing means 40 combined with processing circuitry, as is previously known, provides a signal for the appliance to be shut off when it senses the absence of source gas pressure. Consequently, if the inlet hose 3 is disconnected, the appliance will not inadvertently introduce compressed air into the motor vehicle's fuel reservoir.

This pressure sensing system, according to the invention, also operates by sensing when the pressure of the inlet gas falls below a settable, threshold pressure level that is above zero, for example, 1.38 kPa (0.2 psi). Under such conditions operation of the appliance is suspended. Thus the system of the invention protects against the risk of having the compressor system of the invention interfere with neighbouring appliances.

Referring to Figure 11, an inlet gas pressure sensor 40 for sensing the pressure of gas arriving from inlet line 3 is connected electrically to the main logic controller 11. If the inlet gas pressure sensor 40 sends a signal to controller 11 that a source gas pressure condition below a pre-set limit is being sensed, the controller 11 ensures that the appliance 1 will not start up if it is already shut down; or will shut it down if it is running. The threshold pressure for such a shut-down is settable in order to allow the appliance to accommodate the requirements of different locations, e.g. in accordance with local line gas pressures or local regulations.

Referring to Figure 11, the motor controller circuitry 22 is located within the casing 12, in the blow-down volume 31. The wall of the casing 12 acts as heat sink for the heat produced by the motor controller circuitry 22 and as a shield for incoming and outgoing electromagnetic emissions.

As shown in Figure 11, the main logic controller 11 is connected to receive signals from air flow sensor 34, flammable gas sensor 35, source gas pressure sensor 40 as well as from the manual inputs on the control and display panel 15 and other sources such as the high pressure outlet gas sensor 43. The main logic controller 11 is able to activate the motor 30 and govern its speed through motor controller 22 providing low speed on start-up, high speed during initial compression and reduced speed during final compression.

On start-up, low motor speeds are adopted to reduce otherwise high start-up current drains on the electrical supply system. This enables the unit to operate off of a standard household voltage, e.g. 110-120 volt, moderately fused electrical supply system. After start-up, initial compression can be effected with a high motor speed. Once higher pressures have been established in the motor vehicle fuel reservoir by the final output stage of the compressor system, according to the invention motor speed is reduced in order to moderate ring wear and limit power consumption. This procedure is especially suited to oil-less compressors as the wear rate of the sealing rings within the compressor cylinders of such units increases when the compressor system is operated at high speed against a high-back pressure.

According to the invention the speed of the electric motor is also controlled to avoid natural resonant frequencies arising from its mechanical components that would otherwise increase the noise and vibration generated by the unit.

### CONCLUSION

The foregoing has constituted a description of specific embodiments showing how the invention may be applied and put into use. These embodiments are only exemplary. The invention in its broadest, and more specific aspects, is further described and defined in the claims which now follow.

These claims, and the language used therein, are to be understood in terms of the variants of the invention which have been described. They are not to be restricted to such variants, but are to be read as covering the full scope of the invention as is implicit within the invention and the disclosure that has been provided herein.

## Claims

1. An appliance for refuelling gaseous fuel motor vehicles while they are parked at a residence or other location where an upright support (61) is available, comprising:
a) a housing (7) containing a motor/compressor assembly (32) in the form of a multi-stage gas compressor (29) and an electric motor (30) that drives the multistage compressor (29), said compressor (29) and motor (30) being contained in a common, sealed casing (7, 22);
b) an electrical connection means to supply power to the motor (30);
c) a gas inlet (3) on the appliance to connect the appliance to a source of gas; and
d) a gas outlet (2) for delivery of compressed gas to a fuel storage reservoir, **characterised in that** the appliance further comprises:
e) monitoring and control elements (34, 35) that allow the appliance to operate in an unattended manner, and
f) support means (16, 19, 49) to allow the appliance to be mounted on said upright support (61) at a height that is above 0.91 m (36 inches) from the ground.

2. An appliance as claimed in claim 1, **characterised in that** the appliance comprises vibration isolation means (37, 39, 53) positioned to reduce the transmission of vibrations arising from the motor (30) into the upright support (61).

3. An appliance as claimed in claim 2, **characterised in that** the vibration isolation means (37, 39, 53) comprises first and second vibration isolation means located in series between the motor (30) and the upright support (61).

4. An appliance as claimed in claim 3, **characterised in that** the first vibration isolation means (37, 39) is to reduce the transmission of vibrations arising from the motor (30) into the housing (7), said first isolation means comprising flexible polymeric mounts (37) positioned on either side of a horizontal plane passing approximately through the centre of mass of the motor/compressor assembly (32), along an axis formed by a straight line extending between the mounts (37) and through said horizontal plane, to secure the motor/compressor assembly (32) to the housing (7).

5. An appliance as claimed in claim 4, **characterised in that** a damper means. (39) extends between the motor/compressor assembly (32) and the housing (7) to absorb vibrational energy arising from motion of the motor/compressor assembly (32) about said axis.

6. An appliance as claimed in any one of claims 3 to 5, **characterised in that** the second vibration isolation means (53) is to reduce the transmission of vibrations from the appliance housing (7) to said upright support (61), said second vibration isolation means comprising a plurality of flexible polymeric washers (53) that are positioned on the appliance for being placed between the housing (7) and upright support (61).

7. An appliance as claimed in claim 6, **characterised in that** each of said flexible, polymeric washers (53) are set at an inclined angle that eliminates or minimizes the shearing force on such washers (53).

8. An appliance as claimed in claim 7, **characterised in that** each of said flexible, polymeric washers (53) has a width, a length, a central axis and a mounting hole formed along its central axis, said length being approximately equal to said width.

9. An appliance as claimed in claim 7, **characterised in that** the housing (7) itself is provided with mounting hardware which includes a frame (49) with two mounting bars (50) provided with notches (56) for mounting onto mounting brackets (16, 19) positioned on the support structure (61), each of said flexible, polymeric washers (53) being located between said frame (49) and said housing (7)

10. An appliance as claimed in claim 9, **characterised in that** said brackets (16, 19) comprise tapered indentations (57) to receive said notches (56) whereby the mounting of the appliance on said brackets (16, 19) may be effected by lifting the appliance with its frame (40) to align the notches (56) with the indentations (57) and advancing these elements into engagement.

11. An appliance as claimed in claim 10, **characterised in that** a latch or tether (58) extends between the frame (49) or housing (7) and at least one of said brackets (16, 19) to provide security in the event of a seismic disruption.

12. An appliance as claimed in claim 1, **characterised in that** a ventilation system is provided, which comprises:
g) an air inlet (13), a fan (32A) and an air outlet (36) in the housing (7) to provide an air circulation zone around the motor/compressor assembly (32); and
h) a flammable gas sensor (35) which is positioned proximate to the air outlet (36) to detect flammable gas passing through the ventilation system,
whereby, when the appliance is mounted on said support means (16, 19, 49), the fan (32A) will draw air from the adjacent environmental space and the flammable gas sensor (35) will detect flammable gas that has either escaped from the motor/compressor assembly (32) or is present in the adjacent environmental space.

13. An appliance as claimed in claim 12, **characterised in that** a cowling (22) is mounted over the motor/compressor assembly (32) to confine the air circulation zone around said motor/compressor assembly (32).

14. An appliance as claimed in any one of the preceding claims, in combination with an upright support (61) to which the appliance is fastened.

## Patentansprüche

1. Vorrichtung zum Betanken von Kraftfahrzeugen mit gasförmigen Kraftstoff, wenn sie zu Hause oder an anderer Stelle geparkt sind, wo eine senkrechte Halterung (61) zur Verfügung steht, umfassend
a) ein Gehäuse (7), das eine Motor-Kompressor-Baugruppe (32) enthält in Form eines Mehrstufen-Gaskompressors (29) und eines Elektromotors (30), der den Mehrstufen-Kompressor (29) antreibt, wobei der Kompressor (29) und der Motor (30) gemeinsam in einem abgedichteten Gehäuse (7, 22) enthalten sind;
b) eine elektrische Anschlusseinrichtung zur Versorgung des Motors (33) mit Energie;
c) einen Gaseinlass (3), der auf der Vorrichtung ist und der die Vorrichtung mit einer Gasquelle verbindet;
d) einen Gasauslass (2) für das Anbringen von komprimierten Gas zu einem Kraftstoffvorratsbehälter; **dadurch gekennzeichnet, dass** die Vorrichtung zudem
e) Überwachungs- und Regelelemente (34, 35) aufweist, die einen unüberwachten Betrieb der Vorrichtung erlauben, und
f) eine Halterungseinrichtungen (16, 19, 49), die eine Montage der Vorrichtung auf der senkrechten Halterung (71) in einer Höhe von mehr als 0,91 Meter (36 Zoll) über Grund erlauben.

2. Vorrichtung nach Anspruch 1, **dadurch gekennzeichnet, dass** die Vorrichtung eine schwingungstrennende Einrichtungen (37, 39, 53) aufweist, so angeordnet, dass eine Übertragung der Schwingungen von dem Motor (30) auf die senkrechte Halterung (91) vermindert ist.

3. Vorrichtung nach Anspruch 2, **dadurch gekennzeichnet, dass** die schwingungstrennende Einrichtung (37, 39, 53) zwei schwingungstrennende Elemente besitzt, die zwischen dem Motor (30) und der senkrechten Halterung (61) in Reihe montiert sind.

4. Vorrichtung nach Anspruch 3, **dadurch gekennzeichnet, dass** die erste schwingungstrennende Einrichtung (37, 39, 53) eine Einrichtung ist zur Verminderung der Übertragung von Schwingungen des Motors (30) in das Gehäuse (7), wobei die erste Isolationseinrichtung flexible Polymerbefestigungen (37) besitzt, die auf beiden Seiten einer horizontalen Ebene angeordnet sind, welche in etwa durch den Massenschwerpunkt der Motor-Kompressor-Baugruppe (32) geht und zwar längs einer Achse, die von einer Geraden gebildet wird, welche sich zwischen den Befestigungen (37) und durch die horizontale Ebene erstreckt und welche die Motor-Kompressor-Baugruppe (32) am Gehäuse (7) sichert.

5. Vorrichtung nach Anspruch 4, **dadurch gekennzeichnet, dass** eine Dämpfeinrichtung (39) sich zwischen der Motor-Kompressor-Baugruppe (32) und dem Gehäuse (7) erstreckt und die Schwingungsenergie absorbiert, die aus der freien Bewegung der Motor-Kompressor-Baugruppe (32) um dessen Achse resultiert.

6. Vorrichtung nach einem der Ansprüche 3 bis 5, **dadurch gekennzeichnet, dass** die zweite schwingungstrennende Einrichtung (53) eine Einrichtung ist zur Verminderung der Übertragung von Schwingungen von dem Vorrichtungsgehäuse (7) auf die senkrechte Halterung (61), wobei die zweite schwingungstrennende Einrichtung eine Anzahl flexibler Polymer-Beilagscheiben (53) umfasst, angeordnet auf der Vorrichtung für ein Plazieren zwischen dem Gehäuse (7) und der senkrechten Halterung (61).

7. Vorrichtung nach Anspruch 6, **dadurch gekennzeichnet, dass** die flexiblen Polymer-Beilagscheiben (53) in einem geneigten Winkel stehen, der eine Scherkraft auf derartige Beilagscheiben (53) ausschaltet oder kleinstmöglich hält.

8. Vorrichtung nach Anspruch 7, **dadurch gekennzeichnet, dass** die flexiblen Polymer-Beilagscheiben (53) eine Breite haben, eine Länge, eine Mittelachse und ein Befestigungsloch, das längs ihrer Mittelachse verläuft, wobei die Länge in etwa gleich der Breite ist.

9. Vorrichtung nach Anspruch 7, **dadurch gekennzeichnet, dass** das Gehäuse (7) selbst mit Befestigungsbeschlägen versehen ist, umfassend einen Rahmen (49) mit zwei Befestigungstäben (50), welche mit Kerben (56) versehen sind für eine Befestigung auf den Befestigungsklammern (16, 19), welche auf der Halterungsstruktur (61) angeordnet sind, wobei die flexiblen Polymerbeilagscheiben (53) zwischen Rahmen (49) und Gehäuse (7) angeordnet sind.

10. Vorrichtung nach Anspruch 9, **dadurch gekennzeichnet, dass** die Klammern (16, 19) sich verjüngende Einbuchtungen (57) besitzen zur Aufnahme der Kerben (56), so dass eine Befestigung der Vorrichtung auf den Klammern (16, 19) erfolgen kann und zwar durch Hochheben der Vorrichtung mit ihrem Rahmen (40), Ausrichten der Kerben (56) mit den Einbuchtungen (57) und Vorschieben dieser Elemente in Eingriff.

11. Vorrichtung nach Anspruch 10, **dadurch gekennzeichnet, dass** eine Klinke oder Haltegurt (58) sich zwischen dem Rahmen (49) oder Gehäuse (7) und mindestens einer der Klammern (16, 19) erstreckt zur Bereitstellung einer Sicherung im Falle eines Erdbebens.

12. Vorrichtung nach Anspruch 1, **dadurch gekennzeichnet, dass** ein Belüftungssystem bereitgestellt ist, umfassend
g) einen Gaseinlass (13), einen Ventilator (32a) und einen Luftauslass (36) in dem Gehäuse (7), so dass eine Zone mit Luftzirkulation um die Motor-Kompressor-Baugruppe (32) bereitgestellt wird;
h) einen Sensor (35) für entzündliches Gas, der nächst dem Luftauslass (36) angeordnet ist zum Erfassen eines entzündlichen Gases, das durch das Ventilationssystem geht,
wodurch, ist die Vorrichtung auf der Halterungseinrichtung (16, 19, 49) montiert, der Ventilator (32A) Luft von dem benachbarten Umgebungsraum abziehen wird und der Flammgas-Sensor (35) das entzündliche Gas entdecken kann, das bis dato aus der Motor-Kompressor-Baugruppe (32) entwichen ist oder in dem benachbarten Umgebungsraum zugegen ist.

13. Vorrichtung nach Anspruch 12, **dadurch gekennzeichnet, dass** eine Haube (22) über der Motor-Kompressor-Baugruppe (32) montiert ist zur Begrenzung der Luftzirkulationszone um die Motor-Kompressor-Baugruppe (32).

14. Vorrichtung nach irgendeinem der vorhergehenden Ansprüche, in Verbindung mit einer aufrechten Halterung (61), an der die Vorrichtung befestigt ist.

## Revendications

1. Appareil pour ravitailler en combustible des véhicules à moteur utilisant des combustibles gazeux tandis qu'ils sont stationnés à une résidence ou un autre endroit où est disponible un support vertical (61), comprenant :
a) un boîtier (7) contenant un ensemble de moteur/compresseur (32) sous forme de compresseur de gaz à étages multiples (29) et un moteur électrique (30) qui entraîne le compresseur à étages multiples (29), lesdits compresseur (29) et moteur (30) étant contenus dans un boîtier commun obturé de manière étanche (7, 22) ;
b) un moyen de connexion électrique destiné à alimenter le moteur (30) en énergie ;
c) une entrée de gaz (3) sur l'appareil, pour connecter l'appareil à une source de gaz; et
d) une sortie de gaz (2) pour la délivrance de gaz comprimé vers un réservoir à combustible, **caractérisé par le fait que** l'appareil comprend par ailleurs :
e) des éléments de surveillance et de contrôle (34, 35) qui permettent que l'appareil fonctionne sans surveillance, et
f) un moyen de support (16, 19, 49) pour permettre que l'appareil soit monté sur ledit support vertical (61) à une hauteur qui est à plus de 0,91 m (36 pouces) au-dessus du sol.

2. Appareil selon la revendication 1, **caractérisé par le fait que** l'appareil comprend un moyen d'isolation de vibrations (37, 39, 53) positionné de manière à réduire la transmission de vibrations résultant du moteur (30) vers le support vertical (61).

3. Appareil selon la revendication 2, **caractérisé par le fait que** le moyen d'isolation de vibrations (37, 39, 53) comprend deux éléments d'isolation de vibrations disposés en série entre le moteur (30) et le support vertical (61).

4. Appareil selon la revendication 3, **caractérisé par le fait que** le premier moyen d'isolation de vibrations (37, 39) est un moyen destiné à réduire la transmission de vibrations résultant du moteur (30) vers le boîtier (7), ledit premier moyen d'isolation de vibrations comprenant des dispositifs de montage polymères flexibles (37) positionnés d'un côté et de l'autre d'un plan horizontal passant environ par le centre de la masse de l'ensemble de moteur/compresseur (32), le long d'un axe formé par une ligne droite s'étendant entre les dispositifs de montage (37) et par ledit plan horizontal, pour fixer l'ensemble de moteur/compresseur (32) au boîtier (7).

5. Appareil selon la revendication 4, **caractérisé par le fait qu'**un moyen amortisseur (39) s'étend entre l'ensemble de moteur/compresseur (32) et le boîtier (7), pour absorber l'énergie de vibration résultant du mouvement de l'ensemble de moteur/compresseur (32) autour dudit axe.

6. Appareil selon l'une quelconque des revendications 3 à 5, **caractérisé par le fait que** le deuxième moyen d'isolation de vibration (53) est un moyen destiné à réduire la transmission de vibrations du boîtier de l'appareil (7) vers ledit support vertical (61), ledit deuxième moyen d'isolation de vibration comprenant une pluralité de rondelles polymères flexibles (53) qui sont positionnées sur l'appareil de manière à être placées entre le boîtier (7) et le support vertical (61).

7. Appareil selon la revendication 6, **caractérisé par le fait que** chacune desdites rondelles polymères flexibles (53) est placée selon un angle incliné qui élimine ou minimise la force de cisaillement sur ces rondelles (53).

8. Appareil selon la revendication 7, **caractérisé par le fait que** chacune desdites rondelles polymères flexibles (53) a une largeur, une longueur, un axe central et un trou de montage formé le long de son axe central, ladite longueur étant environ égale à ladite largeur.

9. Appareil selon la revendication 7, **caractérisé par le fait que** le boîtier (7) lui-même est pourvu d'une quincaillerie de montage qui comporte un bâti (49) avec deux barres de montage (50) pourvues d'encoches (56) pour le montage sur des bras-supports de montage (16, 19) positionnés sur la structure de support (61), chacune desdites rondelles polymères flexibles (53) étant située entre ledit bâti (49) et ledit boîtier (7).

10. Appareil selon la revendication 9, **caractérisé par le fait que** lesdits bras-supports (16, 19) comprennent des entailles coniques (57) destinées à recevoir lesdites encoches (56), le montage de l'appareil sur lesdits bras-supports (16, 19) pouvant s'effectuer en soulevant l'appareil par son bâti (40), de manière à aligner les encoches (56) avec les entailles (57) et à avancer ces éléments pour qu'ils viennent en prise.

11. Appareil selon la revendication 10, **caractérisé par le fait qu'**un verrou ou une chaîne d'attache (58) s'étend entre le bâti (49) ou le boîtier (7) et au moins l'un desdits bras-supports (16, 19), pour offrir une sécurité en cas de secousse sismique.

12. Appareil selon la revendication 1, **caractérisé par le fait qu'**il est prévu un système de ventilation qui comprend :
g) une entrée d'air (13), un ventilateur (32A) et une sortie d'air (36) dans le boîtier (7), pour créer une zone de circulation d'air autour de l'ensemble de moteur/compresseur (32) ; et
h) un détecteur de gaz inflammable (35) qui est positionné près de la sortie d'air (36), pour détecter le gaz inflammable passant dans le système de ventilation,
où, lorsque l'appareil est monté sur ledit moyen de support (16, 19, 49), le ventilateur (33A) aspirera de l'air de l'espace environnemental adjacent et le détecteur de gaz inflammable (35) détectera le gaz inflammable qui soit s'est échappé de l'ensemble de moteur/compresseur (32), soit est présent dans l'espace environnemental adjacent.

13. Appareil selon la revendication 12, **caractérisé par le fait qu'**un capot (22) est monté sur l'ensemble de moteur/compresseur (32), pour confiner la zone de circulation d'air autour dudit ensemble de moteur/compresseur (32).

14. Appareil selon l'une quelconque des revendications précédentes, en combinaison avec un support vertical (61) auquel est fixé l'appareil.
